# EUROPÄISCHE PATENTSCHRIFT

(11) **EP 3 077 657 B1**
(45) Veröffentlichungstag und Bekanntmachung des Hinweises auf die Patenterteilung: **26.09.2018**
(21) Anmeldenummer: 15777924.0
(22) Anmeldetag: 07.10.2015
(51) Int. Cl.: F02M 59/10, F02M 59/06, F04B 9/04, F04B 1/04

(54) **ANTRIEBSVORRICHTUNG ZUM ANTREIBEN EINER KRAFTSTOFFHOCHDRUCKPUMPE SOWIE KRAFTSTOFFHOCHDRUCKPUMPE**
DRIVE DEVICE FOR DRIVING A HIGH PRESSURE FUEL PUMP, AND HIGH PRESSURE FUEL PUMP
DISPOSITIF D'ENTRAÎNEMENT POUR ENTRAÎNER UNE POMPE À CARBURANT À HAUTE PRESSION ET POMPE À CARBURANT À HAUTE PRESSION

(30) Priorität: 15.10.2014 DE 102014220937
(43) Veröffentlichungstag der Anmeldung: 12.10.2016
(73) Patentinhaber: Continental Automotive GmbH, 30165 Hannover (DE)
(72) Erfinder: SCHMIDBAUER, Thomas, 93167 Falkenstein (DE)
(86) Internationale Anmeldenummer: PCT/EP2015/073113
(87) Internationale Veröffentlichungsnummer: WO 2016/058877

(56) Entgegenhaltungen:
- EP-A1- 2 628 942
- EP-A2- 1 347 172
- WO-A2-2008/012295
- DE-A1- 19 858 862
- DE-C- 960 776

## Beschreibung

Die Erfindung betrifft eine Antriebsvorrichtung zum Antreiben einer Kraftstoffhochdruckpumpe einer Brennkraftmaschine sowie eine Kraftstoffhochdruckpumpe, die eine solche Antriebsvorrichtung aufweist.

Kraftstoffhochdruckpumpen, die einen Kraftstoff, der zu einem Brennraum einer Brennkraftmaschine zugeführt werden soll, mit hohem Druck beaufschlagen, werden zumeist als Kolbenpumpen ausgebildet, in denen ein Kolben einen in einer Druckkammer vorhandenen Kraftstoff durch eine translatorische Bewegung zusammendrückt und so mit hohem Druck beaufschlagt. Beispielsweise beaufschlagen Kraftstoffhochdruckpumpen in Benzin-Brennkraftmaschinen den Kraftstoff mit einem Druck zwischen 200 bar und 250 bar, während Kraftstoffhochdruckpumpen in Diesel-Brennkraftmaschinen den Kraftstoff mit einem Druck zwischen 2000 bar und 2500 bar beaufschlagen.

Um den Kolben in seiner translatorischen Bewegung anzutreiben, wird häufig als Antriebswelle eine Nockenwelle verwendet, die sich um eine Antriebswellendrehachse dreht, so dass periodisch ein über die Antriebswelle vorspringender Nocken den Kolben von der Antriebswellendrehachse wegdrückt, so dass das Volumen der Druckkammer, in der der Kraftstoff sich befindet, verkleinert wird, und so der Kraftstoff mit Druck beaufschlagt wird. Bei einem Weiterdrehen der Antriebswelle bewegt sich der Kolben dann wieder in Richtung auf die Antriebswellendrehachse zu, wodurch sich das Volumen des Druckraumes wieder vergrößert.

Zum Übertragen der translatorischen Bewegung von der Antriebswelle auf den Kolben gibt es unterschiedliche Ansätze, u. a. wird häufig ein Exzenterring, ein sogenannter Reiter, eingesetzt, der derart in Kontakt mit der Antriebswelle ist, dass sich die Antriebswelle zusammen mit dem Nocken unter dem Exzenterring weg dreht, während sich der Exzenterring in einer translatorischen Richtung auf- und abbewegt, ohne dabei jedoch selbst zu drehen. Der Exzenterring hat eine ebene Fläche, die in Wirkkontakt mit dem Kolben ist, und zwar zumeist über einen Gleitschuh, der über die ebene Fläche des Exzenterrings gleitet und so die Bewegung des Exzenterrings auf den Kolben überträgt.

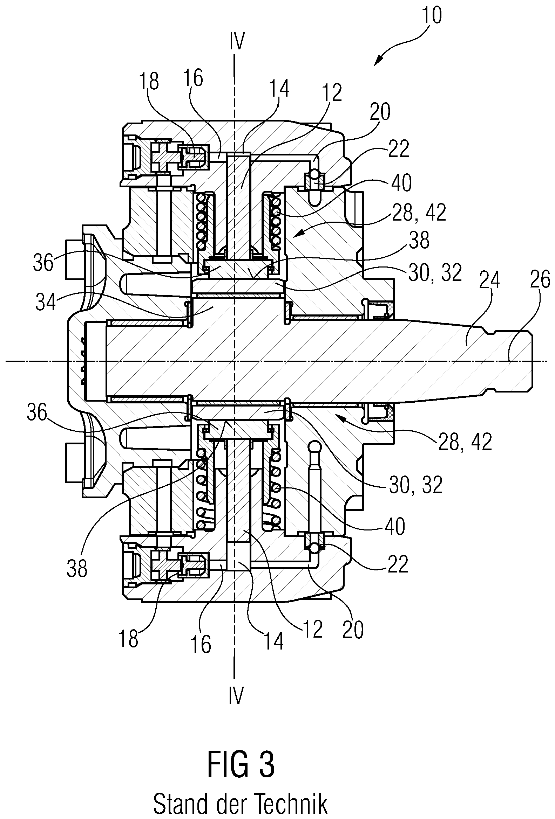

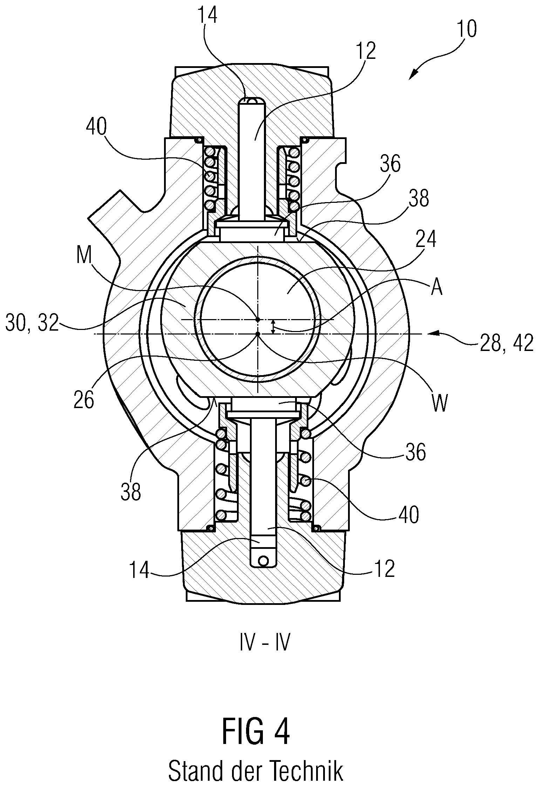

Eine solche Anordnung ist beispielsweise in Fig. 3 und Fig. 4 gezeigt. Fig. 3 ist eine Längsschnittansicht durch eine Kraftstoffhochdruckpumpe 10 gemäß dem Stand der Technik, während Fig. 4 eine Schnittansicht durch die Kraftstoffhochdruckpumpe 10 aus Fig. 3 entlang der Linie IV-IV zeigt.

Die Kraftstoffhochdruckpumpe 10 aus dem Stand der Technik wie in Fig. 3 und Fig. 4 gezeigt weist jeweils zwei Kolben 12 auf, die sich gegenüber liegen und jeweils eine Druckkammer 14 an einer Seite begrenzen. Die Druckkammern 14 werden jeweils über einen Zulauf 16, in dem ein erstes Ventil 18 angeordnet ist, mit einem Kraftstoff gespeist, der durch translatorische Bewegung des Kolbens 12 mit einem hohen Druck beaufschlagt wird. Der mit hohem Druck beaufschlagte Kraftstoff wird dann jeweils über einen Ablauf 20, in dem ein zweites Ventil 22 angeordnet ist, zu einer Brennkammer geleitet. Die Kolben 12 werden von einer Antriebswelle 24 angetrieben, die sich um eine Antriebswellendrehachse 26 dreht. Um den Kolbenhub ausführen zu können, wird die mechanische Energie in Form von Rotationsenergie, d. h. ein Drehmoment, in eine translatorische Bewegung des Kolbens 12 übertragen, indem ein sog. Exzenterantrieb 28 zwischen Antriebswelle 24 und Kolben 12 zwischengeschaltet ist.

Der Exzenterantrieb 28 weist einen Exzenterring 30 auf, unter dem sich die Antriebswelle 24 und ein daran angeordneter Nocken 34 wegdreht. Dabei wird der Exzenterring 30 periodisch in Richtung auf die Druckkammer 14 und von dieser weggeführt, ohne sich dabei jedoch selbst zu drehen. Ein Mittelpunkt M des Exzenterrings 30 ist mit einem Abstand A von der Drehachse 26 bzw. dem Wellenmittelpunkt W beabstandet. Mit der Rotation um W und der Exzentriträt A= *M̅W̅* ergibt sich ein Hub von 2*·M̅W̅*.

Weiter weist der Exzenterantrieb 28 einen Gleitschuh 36 auf, der während der Bewegung des Exzenterrings 30 auf einer ebenen Exzenterringfläche 38 gleitet und die translatorische Bewegung des Exzenterrings 30 an den Kolben 12 weiterleitet.

Damit der Kolben 12 und der Gleitschuh 36 beständig mit der Exzenterringfläche 38 in Kontakt sind, ist eine Feder 40 vorgesehen, die den Kolben 12 und den Gleitschuh 36 auf die Exzenterringfläche 38 vorspannt.

Alternativ zu dem in Fig. 3 und Fig. 4 gezeigten Exzenterantrieb 28 gibt es auch Anordnungen, bei denen beispielsweise ein Rollenstößel mit einer Rolle direkt auf dem Nocken 34 der Antriebswelle 24 abrollt und somit die translatorische Bewegung auf den Kolben 12 überträgt. Vorteil dieser Anordnungen mit Rollenstößel ist, dass im Vergleich zu einem Exzenterantrieb 28 statt einer Gleitreibung zwischen Exzenterring 30 und Gleitschuh 36 eine deutlich geringere Wälzreibung zwischen dem Nocken 34 und einer Rolle des Rollenstößels vorhanden ist.

Rollenstößel haben daher zwar den Vorteil, dass eine geringere Reibung zwischen den einzelnen Elementen des Antriebsbereiches vorliegt, sie sind jedoch weniger widerstandsfähig als Exzenterantriebe. Solche Exzenterantriebe können nämlich beispielsweise auch in Verbindung mit Pleueln in einem Verbrennungsmotor verwendet werden, was bei der Verwendung von Rollenstößeln eher schwierig ist.

EP 1 347 172 A2 offenbart eine Antriebsvorrichtung zum Antreiben einer Kraftstoffhochdruckpumpe, die einen mit einer Antriebswelle in Reibverbindung befindlichen Exzenterring zum Umwandeln einer Rotationsbewegung der Antriebswelle um eine Antriebswellendrehachse in eine translatorische Bewegung aufweist, wobei der Exzenterring wenigstens eine gekrümmte Exzenterringfläche aufweist. Weiter umfasst die Antriebsvorrichtung einen von dem Exzenterring beabstandet angeordneten Stößel zum Weiterleiten der translatorischen Bewegung von dem Exzenterring, wobei der Stößel wenigstens eine gekrümmte Stößelfläche aufweist, sowie wenigstens zwei Schwenkkörper, die zwischen der Exzenterringfläche und der Stößelfläche angeordnet und mit der Exzenterringfläche und mit der Stößelfläche in Kontakt sind.

Aufgabe der Erfindung ist es, einen Exzenterantrieb einer Kraftstoffhochdruckpumpe hinsichtlich der Reibungsproblematik zu verbessern.

Diese Aufgabe wird mit einer Antriebsvorrichtung zum Antreiben einer Kraftstoffhochdruckpumpe mit den Merkmalen des Anspruches 1 gelöst.

Eine Kraftstoffhochdruckpumpe, die eine solche Antriebsvorrichtung aufweist, ist Gegenstand des nebengeordneten Anspruchs.

Vorteilhafte Ausgestaltungen der Erfindung sind Gegenstand der abhängigen Ansprüche.

Eine Antriebsvorrichtung zum Antreiben einer Kraftstoffhochdruckpumpe einer Brennkraftmaschine weist einen mit einer Antriebswelle in Reibverbindung befindlichen Exzenterring zum Umwandeln einer Rotationsbewegung der Antriebswelle um eine Antriebswellendrehachse in eine translatorische Bewegung auf, wobei der Exzenterring wenigstens eine ebene Exzenterringfläche aufweist. Weiter umfasst die Antriebsvorrichtung einen von dem Exzenterring beabstandet angeordneten Stößel zum Weiterleiten der translatorischen Bewegung von dem Exzenterring, wobei der Stößel wenigstens eine ebene Stößelfläche aufweist. Zusätzlich sind wenigstens zwei Schwenkkörper vorgesehen, die zwischen der Exzenterringfläche und der Stößelfläche angeordnet und mit der Exzenterringfläche und mit der Stößelfläche in Kontakt sind. Die Schwenkkörper weisen jeweils eine parallel zu der Antriebswellendrehachse verlaufende Erstreckungsachse auf, wobei die Schwenkkörper zum Schwenken um die Erstreckungsachse ausgebildet sind.

Mit der Antriebsvorrichtung wird demgemäß eine Lösung vorgeschlagen, bei der ein Exzenterantrieb unter Verwendung eines Exzenterrings, d. h. ein sehr widerstandsfähiger Antrieb für eine Kraftstoffhochdruckpumpe, verwendet wird, wobei die Reibung zwischen den einen Kolben antreibenden Elementen verringert ist, da zwischen den Schwenkkörpern und der Exzenterringfläche bzw. den Schwenkkörpern und der Stößelfläche keine Gleitreibung, sondern eine einer Wälzreibung entsprechende Schwenkreibung vorliegt.

Bei dieser neuen vorgeschlagenen Lösung handelt es sich daher prinzipiell um einen Exzenterantrieb, der pro Umdrehung der Antriebswelle einen Kolbenhub pro Verdränger ausführt. Der Unterschied zum Gleitschuhantrieb aus dem Stand der Technik besteht darin, dass die Übergabestelle nicht als Gleit-, sondern als Wälz- bzw. Schwenkkontakt ausgebildet ist. Dadurch wird ein reiner Wälz- bzw. Schwenkkontakt mit bestmöglichen und robusten Hertz'schen Kontakten erzeugt.

Das Vorsehen von mehr als einem Schwenkkörper hat den Vorteil, dass dadurch eine größere Stabilität beim Antrieb des Kolbens erzielt werden kann.

Vorzugsweise weisen die Schwenkkörper eine mit der Stößelfläche in Kontakt stehende erste Kontaktfläche und eine mit der Exzenterringfläche in Kontakt stehende zweite Kontaktfläche auf, wobei die erste und/oder die zweite Kontaktfläche um die Erstreckungsachse gewölbt ausgebildet ist.

Dies hat den Vorteil, dass die Schwenkkörper stetig um die Erstreckungsachse schwenken können. Besonders vorteilhaft ist es, wenn sowohl die erste Kontaktfläche als auch die zweite Kontaktfläche gewölbt ausgebildet sind.

In vorteilhafter Ausgestaltung ist die erste und/oder die zweite Kontaktfläche um die Erstreckungsachse konvex ausgebildet. Dabei ist es besonders vorteilhaft, wenn eine Krümmung der ersten und der zweiten Kontaktfläche gleich ist. Dadurch kann eine besonders reibungsarme Bewegung der Schwenkkörper an der Stößelfläche und an der Exzenterringfläche erreicht werden.

In vorteilhafter Ausgestaltung weisen die Schwenkkörper wenigstens eine im Wesentlichen senkrecht zu der Exzenterringfläche und der Stößelfläche angeordnete Seitenfläche auf, die beispielsweise eben ausgebildet ist. Diese wenigstens eine Seitenfläche kann aber auch zum Einsparen von Material und somit Gewicht an den Schwenkkörpern vorzugsweise eine Einschnürung aufweisen. Alternativ oder zusätzlich ist es auch möglich, diese wenigstens eine Seitenfläche konkav auszubilden, was ebenfalls dazu beiträgt, dass Material eingespart werden kann.

Eine alternative konvexe Ausbildung der wenigstens einen Seitenfläche hat den Vorteil, dass die Schwenkkörper gegenüber den wirkenden Kräften in der Kraftstoffhochdruckpumpe stabiler ausgebildet sind als mit einer ebenen Seitenfläche oder mit einer konkaven Seitenfläche. Dabei ist es besonders vorteilhaft, wenn die konvex ausgebildete Seitenfläche eine zu der konvex ausgebildeten ersten oder zweiten Kontaktfläche unterschiedliche Krümmung aufweist.

Insgesamt ist es daher vorteilhaft möglich, die Schwenkkörper jeweils aus einem zylindrischen Wälzkörper zu bilden, dessen Außendurchmesser maximiert wurde, um eine minimale Hertz'sche Kontaktspannung zu erzielen. Da aber der Umfang des zylindrischen Wälzkörpers für einen Arbeitshub nur zu einem Bruchteil benötigt wird, können die Seitenflächen, die eine Krümmung entsprechend der Kontaktflächen aufweisen, vorteilhaft abgeflacht werden, um so Material einzusparen. Die Abflachung kann daher je nach Stabilität, die in den Schwenkkörpern gewünscht ist, zu einer ebenen Seitenfläche oder zu einer Seitenfläche mit einer Einschnürung führen, wobei in beiden Fällen konkave oder konvexe Formen ausgebildet sein können, je nachdem, ob man weiteres Material einsparen möchte oder die Stabilität erhöhen möchte.

Vorzugsweise sind die Schwenkkörper entlang einer Achse der translatorischen Bewegung länglich ausgebildet. Insbesondere liegt eine Länge der Schwenkkörper entlang der Achse der translatorischen Bewegung in einem Bereich von 7 mm bis 20 mm, insbesondere 14 mm bis 18 mm. Durch eine solche Länge der Schwenkkörper ergibt sich ein maximaler Außendurchmesser an den gekrümmten Kontaktflächen, die in einer Krümmung der Kontaktflächen resultiert, welche eine minimale Hertz'sche Kontaktspannung ermöglicht.

Vorzugsweise ist der Stößel ein Tassenstößel, wobei die Stößelfläche an einer zu dem Exzenterring gerichteten Unterseite des Tassenstößels gebildet ist. Tassenstößel haben im Vergleich zu anderen Stößel wie beispielsweise Rollenstößel oder auch pilzförmig ausgebildete Kolben den Vorteil, dass sie Querkräfte, die beim Antrieb des Kolbens wirken, sehr gut aufnehmen können. Bei Verwendung eines Tassenstößels als Stößel wird daher eine vorteilhaft robuste Antriebsvorrichtung zum Antreiben des Kolbens geschaffen.

Vorzugsweise weist der Stößel wenigstens einen neben der Stößelfläche angeordneten, in Richtung auf den Exzenterring vorspringenden Stößelsicherungsvorsprung zum Sichern der Schwenkkörper an der Stößelfläche auf. Damit wird vorteilhaft verhindert, dass die Schwenkkörper während ihrer Bewegung durch Querkräfte ausgelöst den Kontakt mit der Stößelfläche verlieren.

Weiter vorteilhaft weist der Exzenterring wenigstens einen neben der Exzenterringfläche angeordneten, in Richtung auf den Stößel vorspringenden Exzenterringsicherungsvorsprung zum Sichern der Schwenkkörper an der Exzenterringfläche auf. Dadurch wird verhindert, dass durch wirkende Querkräfte die Schwenkkörper ihren Kontakt zu der Exzenterringfläche verlieren.

Besonders bevorzugt sind exakt zwei Schwenkkörper zwischen der Stößelfläche und der Exzenterringfläche vorgesehen. Das Vorsehen von exakt zwei Schwenkkörpern den Vorteil, dass die Auflage auf der Stößelfläche bzw. der Exzenterringfläche nicht überbestimmt, sondern statisch eindeutig bestimmt ist.

Vorzugsweise ist eine Feder zum permanenten Vorspannen des Stößels und der Schwenkkörper auf den Exzenterring vorgesehen. Die Vorspannung der Feder ist vorteilhaft so ausgelegt, dass sie einerseits die Schwenkkörper in engem Kontakt mit der Stößelfläche und der Exzenterringfläche hält, andererseits jedoch eine Schwenkbewegung der Schwenkkörper ermöglicht.

Mit der Antriebsvorrichtung wird ein bewährter Exzenterantrieb vorgeschlagen, der jedoch energetisch optimiert ausgeführt ist, da er eine geringere Reibleistung benötigt und dadurch eine geringere CO₂-Emission entsteht. Vorgeschlagen ist ein robuster Wälz- bzw. Schwenkkontakt durch eine maximale Ausführung der Kontaktradien und durch eine statisch eindeutige Bestimmung, bei dem selbst kleine Durchmesserunterschiede tolerierbar sind.

Beispielsweise können die Schwenkkörper dadurch hergestellt werden, dass zylindrische Wälzkörper seitlich abgeflacht werden, um so eine maximale Energieeffizienz mit Robustheit kombinieren zu können. Anstelle der Abflachung können auch konkave oder konvexe Formen an der oder an den Seitenflächen der Schwenkkörper vorgesehen sein.

Eine Kraftstoffhochdruckpumpe weist vorteilhaft die oben beschriebene Antriebsvorrichtung mit den darin beschriebenen Vorteilen auf.

Eine vorteilhafte Ausgestaltung der Erfindung wird nachfolgend anhand der beigefügten Zeichnungen näher erläutert. Darin zeigt:
- Fig. 1: eine Längsschnittansicht einer Antriebsvorrichtung einer Kraftstoffhochdruckpumpe mit zwei Schwenkkörpern;
- Fig. 2: eine perspektivische Ansicht eines der beiden Schwenkkörper aus Fig. 1;
- Fig. 3: eine Längsschnittansicht einer Kraftstoffhochdruckpumpe aus dem Stand der Technik mit einem Exzenterantrieb; und
- Fig. 4: eine Schnittansicht durch die Linie IV-IV aus Fig. 3.

Der prinzipielle Aufbau einer Kraftstoffhochdruckpumpe 10, die einen Exzenterantrieb 28 aufweist, wurde bereits im Zusammenhang mit den in Fig. 3 und Fig. 4 dargestellten Kraftstoffhochdruckpumpen 10 aus dem Stand der Technik erläutert. Der prinzipielle Aufbau sowie die Funktionsweise der erfindungsgemäßen Kraftstoffhochdruckpumpe 10 entspricht diesen aus dem Stand der Technik bekannten Kraftstoffhochdruckpumpen 10, in denen ein Exzenterring 30 verwendet wird, weist jedoch, wie nachfolgend beschrieben wird, einen verbesserten Aufbau der gesamten Antriebsvorrichtung 42 als solche auf.

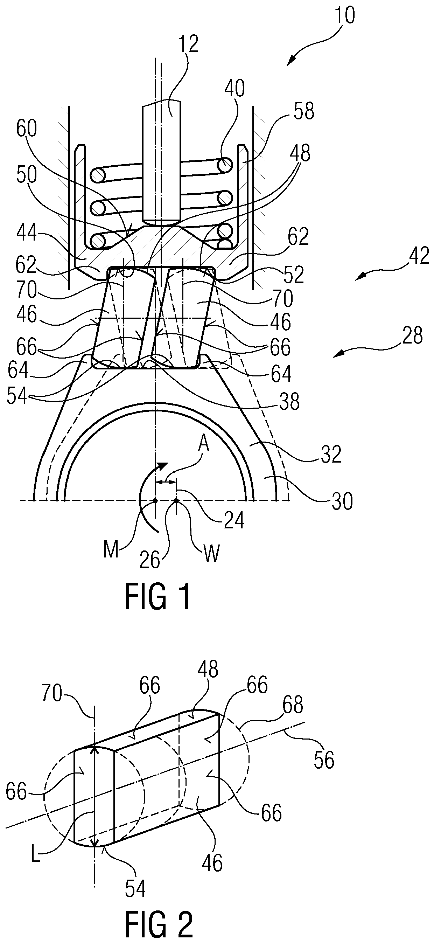

Fig. 1 zeigt daher eine Längsschnittansicht eines Teilbereiches der Kraftstoffhochdruckpumpe im Bereich der Antriebsvorrichtung 42.

Die Antriebsvorrichtung 42 weist eine Antriebswelle 24, einen Exzenterring 30, einen Stößel 44 sowie zwei Schwenkkörper 46 auf. Stattdessen können auch mehr als zwei Schwenkkörper 46 vorgesehen sein, was jedoch zu einem statisch überbestimmten Kontakt führen kann.

Der Exzenterring 30 wird von der Antriebswelle 24, insbesondere einem nicht gezeigten Nocken 34, bei einer Drehbewegung der Antriebswelle 24 um ihre Antriebswellendrehachse 26 auf- und abbewegt, wodurch eine translatorische Bewegung entsteht, die an einen Kolben 12 der Kraftstoffhochdruckpumpe 10 weitergeleitet wird. Um diese translatorische Bewegung auf den Kolben 12 weiterleiten zu können, ist ein Übertragungsmechanismus vorgesehen, der die Schwenkkörper 46 sowie den Stößel 44 umfasst. Die Schwenkkörper 46 sind dabei mit einer ersten Kontaktfläche 48 in Kontakt mit einer Stößelfläche 50, die eben ausgebildet ist und sich an einer zu dem Exzenterring 30 gerichteten Unterseite 52 des Stößels 44 befindet. Auf der gegenüberliegenden Seite sind die Schwenkkörper 46 mit einer zweiten Kontaktfläche 54 in Kontakt mit einer Exzenterringfläche 38, die zu dem Stößel 44 hin gerichtet an dem Exzenterring 30 angeordnet ist.

Die Schwenkkörper 46 weisen jeweils eine parallel zu der Antriebswellendrehachse 26 verlaufende Erstreckungsachse 56 auf, die in Fig. 1 in die Zeichenebene hineinragt. Um diese Erstreckungsachse 56 können die Schwenkkörper 46 schwenken, wenn der Exzenterring 30 von der Antriebswelle 24 bewegt wird.

In Fig. 1 sind in durchgezogenen Linien Schwenkkörper 46 in einer Stellung dargestellt, wenn sich der Exzenterring 30 auf einen oberen Totpunkt zu bewegt, während die gestrichelte Darstellung der Schwenkkörper 56 eine Situation darstellt, in der sich der Exzenterring 30 von dem oberen Totpunkt wieder weg bewegt.

Um eine gute Stabilität der Antriebsvorrichtung 42 ohne Überbestimmung zu erreichen, sind zwei Schwenkkörper 46 zwischen Stößelfläche 50 und Exzenterringfläche 38 angeordnet.

Damit die Schwenkkörper 46 permanent in Kontakt sind mit der Stößelfläche 50 und der Exzenterringfläche 38, ist eine Feder 40 vorgesehen, die den Stößel 44 und die Schwenkkörper 46 auf den Exzenterring 30 vorspannt.

Der Stößel 44 ist als Tassenstößel 58 ausgeführt, was den Vorteil hat, dass er Querkräfte gut aufnehmen und ihnen eine Widerstandskraft entgegensetzen kann. Gleichzeitig kann eine Innenfläche 60 des Tassenstößels 58 als Federteller zum Abstützen der Feder 40 sowie als Auflagefläche für den Kolben 12 dienen.

Sowohl die erste Kontaktfläche 48 als auch die zweite Kontaktfläche 54 der Schwenkkörper 46 sind gewölbt ausgebildet, und zwar vorzugsweise um die Erstreckungsachse 56 konvex gewölbt. Dabei ist die Krümmung der ersten Kontaktfläche 48 und der zweiten Kontaktfläche 54 gleich. Dadurch können die Schwenkkörper 46 während der Bewegung des Exzenterrings 30 mit nur geringen Reibungsverlusten in Kontakt mit der Exzenterringfläche 38 und der Stößelfläche 50 um die Erstreckungsachse 56 schwenken.

Der Stößel 44 und der Exzenterring 30 weisen neben der Stößelfläche 50 bzw. der Exzenterringfläche 38 jeweils Vorsprünge auf, nämlich einen Stößelsicherungsvorsprung 62 bzw. einen Exzenterringsicherungsvorsprung 64. Diese Sicherungsvorsprünge 62, 64 sorgen dafür, dass im Betrieb die Schwenkkörper 46 nicht von der Exzenterringfläche 38 bzw. der Stößelfläche 50 wegrutschen bzw. ausbrechen können und dadurch den Kontakt zu Stößelfläche 50 bzw. Exzenterringfläche 38 verlieren.

Fig. 2 zeigt eine perspektivische Ansicht auf einen der Schwenkkörper 46. Der Schwenkkörper 46 weist senkrecht zu der Exzenterringfläche 38 bzw. der Stößelfläche 50 und damit auch im Wesentlichen senkrecht zu den Kontaktflächen 48, 54 angeordnete Seitenflächen 66 auf. In der in Fig. 2 gezeigten Ausführungsform sind diese Seitenflächen 66 eben ausgebildet. Es ist jedoch auch möglich, die Seitenflächen 66 mit einer Einschnürung zu versehen, um somit Material und damit Gewicht an dem Schwenkkörper 46 einzusparen. Um diesen Zweck zu erzielen, ist es auch möglich, die Seitenflächen 66 konkav auszubilden. Auch eine konvexe Ausbildung der Seitenflächen 66 ist möglich, wobei jedoch die Krümmung der konvexen Seitenflächen 66 vorzugsweise unterschiedlich ist zu der Krümmung der Kontaktflächen 48, 54.

Wie weiter aus Fig. 2 hervorgeht, können die Schwenkkörper 46 aus einem Wälzkörper 68 gebildet werden, der strichliert angedeutet ist. Dazu werden die Seitenflächen durch Wegnahme des seitlichen Materials des Wälzkörpers 68 ausgebildet. Zuvor wurde ein Wälzkörper 68 bereitgestellt, der einen möglichst großen Außendurchmesser aufweist, um somit die Hertz' sehe Kontaktspannung in dem Bereich, in dem der zu erzeugende Schwenkkörper 46 später in Kontakt mit der Exzenterringfläche 38 bzw. der Stößelfläche 50 kommt, weitgehend zu minimieren.

Daher ergibt sich eine Länge L des aus dem Wälzkörper 68 gebildeten Schwenkkörpers 46 entlang einer Achse 70 der translatorischen Bewegung, die in einem Bereich von 14 mm bis 18 mm liegt, insbesondere zwischen 15,5 mm und 16,5 mm.

Die Antriebsvorrichtung 42 bzw. eine Kraftstoffhochdruckpumpe 10, die mit einer solchen Antriebsvorrichtung 42 ausgestattet ist, hat dadurch den Vorteil, dass ein bewährter Exzenterantrieb 28 unter Verwendung eines Exzenterrings 30 benutzt werden kann, wobei jedoch eine Gleitreibung, die üblicherweise zwischen einem Gleitschuh 36 und der Exzenterringfläche 38 auftritt, verringert werden kann zu einer Wälz-/Schwenkreibung durch das Schwenken des oder der Schwenkkörper 46 um die Erstreckungsachse 56. Dadurch kann ein niedriger Reibungswert ähnlich der Verwendung von Rollenstößeln mit tatsächlich sich um eine Achse drehenden Wälzkörpern erzielt werden, wobei aber ein robuster Exzenterring 30 verwendet wird.

### Bezugszeichenliste

- 10: Kraftstoffhochdruckpumpe
- 12: Kolben
- 14: Druckkammer
- 16: Zulauf
- 18: erstes Ventil
- 20: Ablauf
- 22: zweites Ventil
- 24: Antriebswelle
- 26: Antriebswellendrehachse
- 28: Exzenterantrieb
- 30: Exzenterring
- 34: Nocken
- 36: Gleitschuh
- 38: Exzenterringfläche
- 40: Feder
- 42: Antriebsvorrichtung
- 44: Stößel
- 46: Schwenkkörper
- 48: erste Kontaktfläche
- 50: Stößelfläche
- 52: Unterseite
- 54: zweite Kontaktfläche
- 56: Erstreckungsachse
- 58: Tassenstößel
- 60: Innenfläche
- 62: Stößelsicherungsvorsprung
- 64: Exzenterringsicherungsvorsprung
- 66: Seitenfläche
- 68: Wälzkörper
- 70: Achse
- A: Abstand
- L: Länge
- M: Mittelpunkt Exzenterring
- W: Wellenmittelpunkt

## Patentansprüche

1. Antriebsvorrichtung (42) zum Antreiben einer Kraftstoffhochdruckpumpe (10) einer Brennkraftmaschine, aufweisend
- einen mit einer Antriebswelle (24) in Reibverbindung befindlichen Exzenterring (30) zum Umwandeln einer Rotationsbewegung der Antriebswelle (24) um eine Antriebswellendrehachse (26) in eine translatorische Bewegung, wobei der Exzenterring (30) wenigstens eine ebene Exzenterringfläche (38) aufweist,
- einen von dem Exzenterring (30) beabstandet angeordneten Stößel (44) zum Weiterleiten der translatorischen Bewegung von dem Exzenterring (30), wobei der Stößel (44) wenigstens eine ebene Stößelfläche (50) aufweist,
- wenigstens zwei Schwenkkörper (46), die zwischen der Exzenterringfläche (38) und der Stößelfläche (50) angeordnet und mit der Exzenterringfläche (38) und mit der Stößelfläche (50) in Kontakt sind,
wobei die Schwenkkörper (46) jeweils eine parallel zu der Antriebswellendrehachse (26) verlaufende Erstreckungsachse (56) aufweisen, wobei die Schwenkkörper (46) zum Schwenken um die Erstreckungsachse (56) ausgebildet sind.

2. Antriebsvorrichtung (42) nach Anspruch 1,
**dadurch gekennzeichnet, dass** die Schwenkkörper (46) jeweils eine mit der Stößelfläche (50) in Kontakt stehende erste Kontaktfläche (48) und jeweils eine mit der Exzenterringfläche (38) in Kontakt stehende zweite Kontaktfläche (54) aufweisen, wobei die erste und/oder die zweite Kontaktfläche (54) um die Erstreckungsachse (56) gewölbt ausgebildet ist.

3. Antriebsvorrichtung (42) nach Anspruch 2,
**dadurch gekennzeichnet, dass** die erste und/oder die zweite Kontaktfläche (48, 54) um die Erstreckungsachse (56) konvex gewölbt ausgebildet ist, wobei insbesondere eine Krümmung der ersten und der zweiten Kontaktfläche (48, 54) gleich ist.

4. Antriebsvorrichtung (42) nach einem der Ansprüche 1 bis 3,
**dadurch gekennzeichnet, dass** die Schwenkkörper (46) jeweils wenigstens eine im Wesentlichen senkrecht zu der Exzenterringfläche (38) und der Stößelfläche (50) angeordnete Seitenfläche (66) aufweisen, die eben oder mit einer Einschnürung oder konkav oder konvex ausgebildet ist, wobei die konvex ausgebildete Seitenfläche (66) insbesondere eine zur der konvex ausgebildeten ersten oder zweiten Kontaktfläche (48, 54) unterschiedliche Krümmung aufweist.

5. Antriebsvorrichtung (42) nach einem der Anspruche 1 bis 4,
**dadurch gekennzeichnet, dass** die Schwenkkörper (46) entlang einer Achse (70) der translatorischen Bewegung länglich ausgebildet sind, wobei insbesondere eine Länge (L) der Schwenkkörper (46) entlang der Achse (70) der translatorischen Bewegung in einem Bereich von 7 mm bis 20 mm, insbesondere 14 mm bis 18 mm, liegt.

6. Antriebsvorrichtung (42) nach einem der Anspruch 1 bis 5,
**dadurch gekennzeichnet, dass** der Stößel (44) ein Tassenstößel (58) ist, wobei die Stößelfläche (50) an einer zu dem Exzenterring (30) gerichteten Unterseite (52) des Tassenstößels (58) gebildet ist.

7. Antriebsvorrichtung (42) nach einem der Ansprüche 1 bis 6,
**dadurch gekennzeichnet, dass** der Stößel (44) wenigstens einen neben der Stößelfläche (50) angeordneten, in Richtung auf den Exzenterring (30) vorspringenden Stößelsicherungsvorsprung (62) zum Sichern der Schwenkkörper (46) an der Stößelfläche (50) aufweist.

8. Antriebsvorrichtung (42) nach einem der Ansprüche 1 bis 7,
**dadurch gekennzeichnet, dass** der Exzenterring (30) wenigstens einen neben der Exzenterringfläche (38) angeordneten, in Richtung auf den Stößel (44) vorspringenden Exzenterringsicherungsvorsprung (64) zum Sichern der Schwenkkörper (46) an der Exzenterringfläche (38) aufweist.

9. Antriebsvorrichtung (42) nach einem der Ansprüche 1 bis 8,
**dadurch gekennzeichnet, dass** exakt zwei Schwenkkörper (46) zwischen der Stößelfläche (50) und der Exzenterringfläche (38) vorgesehen sind.

10. Antriebsvorrichtung (42) nach einem der Ansprüche 1 bis 9,
**dadurch gekennzeichnet, dass** eine Feder (40) zum permanenten Vorspannen des Stößels (44) und des Schwenkkörpers (46) auf den Exzenterring (30) vorgesehen ist.

11. Kraftstoffhochdruckpumpe (10), aufweisend eine Antriebsvorrichtung (42) nach einem der Ansprüche 1 bis 10.

## Claims

1. Drive device (42) for driving a high-pressure fuel pump (10) of an internal combustion engine, having
- an eccentric ring (30) which is in frictional connection with a drive shaft (24) for converting a rotational movement of the drive shaft (24) about a drive shaft rotational axis (26) into a translational movement, wherein the eccentric ring (30) has at least one flat eccentric ring surface (38),
- a tappet (44) arranged spaced apart from the eccentric ring (30) for passing on the translational movement from the eccentric ring (30), wherein the tappet (44) has at least one flat tappet surface (50),
- at least two pivoting bodies (46) which are arranged between the eccentric ring surface (38) and the tappet surface (50) and are in contact with the eccentric ring surface (38) and with the tappet surface (50),
wherein the pivoting bodies (46) have in each case an extension axis (56) running parallel to the drive shaft rotational axis (26), wherein the pivoting bodies (46) are formed for pivoting about the extension axis (56).

2. Drive device (42) according to Claim 1,
**characterized in that** the pivoting bodies (46) have in each case a first contact surface (48) in contact with the tappet surface (50) and in each case a second contact surface (54) in contact with the eccentric ring surface (38), wherein the first and/or the second contact surface (54) is formed to be arched about the extension axis (56).

3. Drive device (42) according to Claim 2,
**characterized in that** the first and/or the second contact surface (48, 54) is formed to be convexly arched about the extension axis (56), wherein in particular a curvature of the first and the second contact surface (48, 54) is identical.

4. Drive device (42) according to any one of Claims 1 to 3,
**characterized in that** the pivoting bodies (46) have in each case at least one lateral surface (66) arranged substantially perpendicular to the eccentric ring surface (38) and the tappet surface (50), which lateral surface (66) is formed to be flat or with a constriction or concavely or convexly, wherein the convexly formed lateral surface (66) has in particular a different curvature to the convexly formed first or second contact surface (48, 54) .

5. Drive device (42) according to any one of Claims 1 to 4,
**characterized in that** the pivoting bodies (46) are formed in an elongated manner along an axis (70) of the translational movement, wherein in particular a length (L) of the pivoting bodies (46) along the axis (70) of the translational movement lies in a range from 7 mm to 20 mm, in particular 14 mm to 18 mm.

6. Drive device (42) according to any one of Claims 1 to 5,
**characterized in that** the tappet (44) is a bucket tappet (58), wherein the tappet surface (50) is formed on an underside (52), which is directed towards the eccentric ring (30), of the bucket tappet (58).

7. Drive device (42) according to any one of Claims 1 to 6,
**characterized in that** the tappet (44) has at least one tappet securing projection (62), which is arranged next to the tappet surface (50) and projects in the direction of the eccentric ring (30), for securing the pivoting bodies (46) on the tappet surface (50).

8. Drive device (42) according to any one of Claims 1 to 7,
**characterized in that** the eccentric ring (30) has at least one eccentric ring securing projection (64), which is arranged next to the eccentric ring surface (38) and projects in the direction of the tappet (44), for securing the pivoting bodies (46) on the eccentric ring surface (38) .

9. Drive device (42) according to any one of Claims 1 to 8,
**characterized in that** exactly two pivoting bodies (46) are provided between the tappet surface (50) and the eccentric ring surface (38).

10. Drive device (42) according to any one of Claims 1 to 9,
**characterized in that** a spring (40) is provided for permanent pretensioning of the tappet (44) and of the pivoting body (46) onto the eccentric ring (30).

11. High-pressure fuel pump (10), having a drive device (42) according to any one of Claims 1 to 10.

## Revendications

1. Dispositif d'entraînement (42) pour l'entraînement d'une pompe à carburant à haute pression (10) d'un moteur à combustion interne, présentant
- une bague excentrique (30) se trouvant en liaison de friction avec un arbre d'entraînement (24) pour la conversion d'un mouvement de rotation de l'arbre d'entraînement (24) autour d'un axe de rotation d'arbre d'entraînement (26) en un mouvement de translation, dans lequel la bague excentrique (30) présente au moins une face de bague excentrique plane (38),
- un poussoir (44) disposé à distance de la bague excentrique (30) pour la retransmission du mouvement de translation depuis la bague excentrique (30), dans lequel le poussoir (44) présente au moins une face de poussoir plane (50),
- au moins deux corps pivotants (46), qui sont disposés entre la face de bague excentrique (38) et la face de poussoir (50) et qui sont en contact avec la face de bague excentrique (38) et avec la face de poussoir (50),
dans lequel les corps pivotants (46) présentent respectivement un axe d'extension (56) s'étendant parallèlement à l'axe de rotation de l'arbre d'entraînement (26), dans lequel les corps pivotants (46) sont conçus pour pivoter autour de l'axe d'extension (56).

2. Dispositif d'entraînement (42) selon la revendication 1, **caractérisé en ce que** les corps pivotants (46) présentent chacun une première face de contact (48) se trouvant en contact avec la face de poussoir (50) et chacun une deuxième face de contact (54) se trouvant en contact avec la face de bague excentrique (38), dans lequel la première et/ou la deuxième face(s) de contact (54) est/sont réalisée(s) sous forme bombée autour de l'axe d'extension (56).

3. Dispositif d'entraînement (42) selon la revendication 2, **caractérisé en ce que** la première et/ou la deuxième face(s) de contact (48, 54) est/sont bombée(s) de façon convexe autour de l'axe d'extension (56), dans lequel en particulier une courbure de la première et de la deuxième face de contact (48, 54) est identique.

4. Dispositif d'entraînement (42) selon l'une quelconque des revendications 1 à 3, **caractérisé en ce que** les corps pivotants (46) présentent respectivement au moins une face latérale (66) disposée essentiellement perpendiculairement à la face de bague excentrique (38) et à la face de poussoir (50), qui est plane ou présente un étranglement ou est concave ou est convexe, dans lequel la face latérale de forme convexe (66) présente en particulier une courbure différente de la première ou de la deuxième face de contact (48, 54) de forme convexe.

5. Dispositif d'entraînement (42) selon l'une quelconque des revendications 1 à 4, **caractérisé en ce que** les corps pivotants (46) sont réalisés sous forme allongée le long d'un axe (70) du mouvement de translation, dans lequel en particulier une longueur (L) des corps pivotants (46) le long de l'axe (70) du mouvement de translation se situe dans une plage de 7 mm à 20 mm, en particulier de 14 mm à 18 mm.

6. Dispositif d'entraînement (42) selon l'une quelconque des revendications 1 à 5, **caractérisé en ce que** le poussoir (44) est un poussoir à cloche (58), dans lequel la face de poussoir (50) est formée sur un côté inférieur (52) du poussoir à cloche (58) tourné vers la bague excentrique (30).

7. Dispositif d'entraînement (42) selon l'une quelconque des revendications 1 à 6, **caractérisé en ce que** le poussoir (44) présente au moins une saillie de blocage de poussoir (62) disposée à côté de la face de poussoir (50) et saillante en direction de la bague excentrique (30), pour le blocage des corps pivotants (46) sur la face de poussoir (50).

8. Dispositif d'entraînement (42) selon l'une quelconque des revendications 1 à 7, **caractérisé en ce que** la bague excentrique (30) présente au moins une saillie de blocage de bague excentrique (64) disposée à côté de la face de bague excentrique (38) et saillante en direction du poussoir (44), pour le blocage des corps pivotants (46) sur la face de bague excentrique (38).

9. Dispositif d'entraînement (42) selon l'une quelconque des revendications 1 à 8, **caractérisé en ce qu'**il est prévu exactement deux corps pivotants (46) entre la face de poussoir (50) et la face de bague excentrique (38).

10. Dispositif d'entraînement (42) selon l'une quelconque des revendications 1 à 9, **caractérisé en ce qu'**il est prévu un ressort (40) pour la précontrainte permanente du poussoir (44) et du corps pivotant (46) sur la bague excentrique (30).

11. Pompe à carburant à haute pression (10), présentant un dispositif d'entraînement (42) selon l'une quelconque des revendications 1 à 10.
